# EUROPÄISCHE PATENTANMELDUNG

(11) **EP 0 806 289 A2**
(43) Veröffentlichungstag der Anmeldung: **12.11.1997**
(21) Anmeldenummer: 97107439.8
(22) Anmeldetag: 06.05.1997
(51) Int. Cl.: B30B 9/24

(54) **Presse zum Entwässern von Suspensionen**

(30) Priorität: 06.05.1996 DE 29608095 U
(71) Anmelder: Gebr. Bellmer GmbH + Co KG Maschinenfabrik, 75223 Niefern-Öschelbronn (DE)
(72) Erfinder: Klabuschnig, Josef, 75242 Neuhausen (DE); Kollmar, Ulrich, 75181 Pforzheim (DE)
(74) Vertreter: Frank, Gerhard, Dipl.-Phys.

(57) **Zusammenfassung**

Eine Presse zum Entwässern von Suspensionen, insbesondere Schlämmen, weist Einrichtungen zur Reinigung der Siebbänder auf. Hierzu wird Spülflüssigkeit in einem Stufenprozeß so geführt, daß deren Mehrfachnutzung bewirkt und somit der Verbrauch von Wasser erheblich reduziert wird.

## Beschreibung

Bei Pressen, beispielsweise Bandfilterpressen, treten immer wieder Verschmutzungen auf, wenn z.B. Schlamm seitlich aus den Preßbändern oder Siebbändern austritt dadurch, daß sich im Gefüge des Schlammes Änderungen ergeben oder die Pressen im Automatikbetrieb nicht schnell genug auf solche Änderungen ansprechen, wenn das aufsichtführende Betriebspersonal gerade anderweitig beschäftigt ist. Solche Schlammaustritte sind in der Regel nur kurzzeitig; entsprechende unerwünschte Effekte können auch beim Anfahren oder bei sonstiger ungenügender Bedienung einer Presse auftreten.

Bei den auf dem Markt befindlichen Pressen werden die Siebe, auf denen sich das Preßgut, beispielsweise der Schlamm, bewegt, mit Spülwasser oder spezieller Reinigungsflüssigkeit permanent gereinnigt, und das anfallende Schmutzwasser wird dann über Rohrleitungen aus den Pressen abgeführt. Für die Siebreinigung eingesetzte Spritzrohre (ggf. mit innenliegenden beweglichen Bürsten) müssen sporadisch auch mit Wasser gespült werden, so daß sich Bürsten und Rohre von Ablagerungen oder Verunreinigungen reinigen können.

Diese Reinigungsprozesse, einschließlich bei seitlichem Schlammaustritt, bedingen einen großen Wasserverbrauch, so daß es Aufgabe der Erfindung ist, diesen Wasserverbrauch erheblich zu reduzieren.

Erfindungsgemäß wird dies im wesentlichen dadurch gelöst, daß die Spülflüssigkeit im Reinigungsprozeß oder in einem Stufenprozeß so geführt wird, daß eine Mehrfachnutzung der Spülflüssigkeit bewirkt und somit der Verbrauch von Wasser erheblich reduziert wird.

Ein Ausführungsbeispiel einer erfindungsgemäßen Presse wird anhand des beigefügten Vertikal-Längsschnitts noch kurz erläutert.

Der grundsätzliche Aufbau solcher Pressen ist bekannt, so daß hier nur auf die erfindungsgemäßen Besonderheiten eingegangen wird:

Zum Auffangen beispielsweise des eingangs erwähnten, aus den Siebbändern B1, B2 übertretenden oder austretenden Preßgutes dient eine Vielzahl von Wannen, die jeweils unterhalb bestimmter Stationen der Presse angeordnet sind.

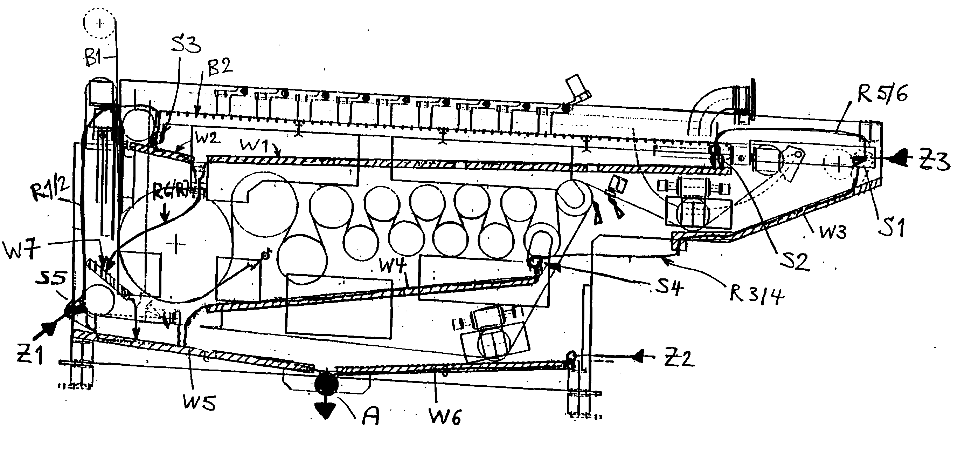

Unterhalb des Aufgabeabschnittes (in der Zeichnung oben horizontal dargestellt) befinden sich zwei Auffangwannen W1, W2, unterhalb des eigentlichen Preßabschnittes mit den S-förmig geschlungenen Siebbändern im Mittelteil der Presse befindet sich eine Auffangwanne W4, unterhalb des vertikalen Einlaufbereichs der Presse liegt eine Auffangwanne W7, unterhalb des Bereichs zwischen Abgabe des entwässerten Preßgutes und dem Aufgabebereich befindet sich eine Auffangwanne W3 und am Boden der Presse sind zwei Auffangwannen W5, W6 angeordnet. Beim Betrieb der Anlage bzw. bei der Reinigung der Siebbänder und der Walzen entsteht nun verschmutzte Spülflüssigkeit, die über diese Auffangwannen W1...W7 abgeleitet wird. Hierzu sind die Wannen so geneigt und übereinander etagen- oder kaskadenartig angeordnet, daß das am Auslaufende einer Wanne austretende Spülwasser noch einer weiteren Verwendung zugeführt werden kann, etwa zum Spülen von Schwallrohren bzw. -rinnen (z.B. S4) oder auch zur Spülung der darunterliegenden Wanne.

Beim dargestellten Ausführungsbeispiel sind drei Zulaufanschlüsse Z1, Z2, Z3 für Reinigungsflüssigkeit vorgesehen, es kann sich hierbei um Frischwasser, regeneriertes Wasser, Recyclingwasser oder auch eine andere spezielle Reinigungsflüssigkeit handeln. Ein gemeinsamer Ablauf A dient zur Abführung der Reinigungsflüssigkeit am Ende eines Reinigungszyklus.

Es sind nun mehrere Reinigungswege vorgesehen:

Ein erster Reinigungsweg führt vom Zulauf Z3 nach der Siebreinigung an dieser Stelle zur Reinigung der Wanne W3, die Reinigungsflüssigkeit wird gesammelt und über Rohr- oder Schlauchleitungen R3/4 über die Schwalleinrichtung S4 der Wanne W4 zugeführt und somit doppelt genutzt. Von der Wanne W4 läuft die Spülflüssigkeit dann schließlich auf die unterste Wanne W5 und von dort in den Abfluß A. Ein zweiter Anschluß Z2 zur Zufuhr von Reinigungsflüssigkeit ist am oberen Ende der Wanne W6 angeordnet und dient zu deren Reinigung.

Ein weiterer Reinigungsflüssigkeitszulauf Z1 versorgt Spritzdüsen S5, die abfließende Flüssigkeit gelangt über die Wanne W5 zum Abfluß A.

Für den Fall, daß die Spritzeinrichtungen S5, S1 gespült werden sollen, können diese Rohre so "umgeschaltet" werden, daß sie von Spülflüssigkeit durchströmt werden und diese ausgangsseitig von S1 über Rohr- oder Schlauchleitungen R5/6 zu Reinigungseinrichtungen S2 auf die Wanne W1 bzw. von S5 über S3 auf die Wanne W2 gelangen, wo sie die Reinigung dieser beiden Wannen bewirken. Die sich am Abflußende der Wannen W1, W2 sammelnde Flüssigkeit gelangt über eine Leitung R6, R7 auf die kurze Schrägwanne W7 unterhalb des Vertikalabschnittes der Presse und dient zu deren Reinigung.

Durch eine geeignete Beschaltung und Verbindung der Funktionsbauteile der Presse lassen sich somit die erforderlichen Reinigungen in den hierfür vorgesehenen notwendigen Abständen durch einfache Umschaltungen durchführen, und es wird somit eine sparsame Verwendung von Reinigungsflüssigkeit gewährleistet.

## Patentansprüche

1. Presse zum Entwässern von Suspensionen, insbesondere Schlämmen, mit Einrichtungen, z.B. Spritzrohren zur Reinigung der Siebbän der und mit Wannen zum Auffangen von Preßgut, dadurch gekennzeichnet, daß über die Wannen und die Bandreinigungseinrichtungen Reinigungsflüssigkeit in einem Stufenprozeß geführt ist, der eine Mehrfachausnutzung dieser Reinigungsflüssigkeit zur Reinigung aufeinanderfolgender Wannen und/oder Spülung von Bandreinigungseinrichtung bewirkt.

2. Presse nach Anspruch 1, dadurch gekennzeichnet, daß der Reinigungsflüssigkeitslauf Abschnitte beinhaltet, in denen die Ablauf-Enden von jeweils oberen, etagenartig übereinander angeordneten Wannen über jeweils einer nächst unteren Wanne angeordnet sind.

3. Presse nach Anspruch 1, dadurch gekennzeichnet, daß der Reinigungsmittellauf Abschnitte beinhaltet, in denen Rohrverteilungssysteme oder -rinnen das Ablauf-Ende von Wannen mit der Zuführung von Bandreinigungseinrichtungen oder umgekehrt verbinden.

4. Presse nach Anspruch 1, dadurch gekennzeichnet, daß der Reinigungsmittellauf ein geschlossener Kreislauf ist, bei dem sich in der untersten Wanne sammelnde Reinigungsflüssigkeit über Rohrleitungen wieder den oberen Wannen und/oder Bandreinigungseinrichtungen zugeführt wird.

5. Presse nach Anspruch 1, dadurch gekennzeichnet, daß Abschnitte zur Führung des Reinigungsmittels zumindest teilweise parallel zueinander laufen und wahlweise benutzt werden.

6. Presse nach Anspruch 5, dadurch gekennzeichnet, daß Bandreinigungseinrichtungen (S1, S5) umschaltbar ausgeführt sind zwischen einem Bandreinigungsbetrieb und einem Wannenreinigungsbetrieb über einen nachgeschalteten Rohrleitungsabschnitt mit Schwallrohren (S2, S3) bzw. -rinnen.

7. Presse nach einem der vorhergehenden Ansprüche, gekennzeichnet durch die separate Zuführung von Reinigungsflüssigkeit beim Reinigen der Spritzrohre der Siebreinigung.

8. Presse nach Anspruch 1, gekennzeichnet durch eine mindestens 3-fach-Ausnutzung der Reinigungsflüssigkeit.
